# EUROPEAN PATENT SPECIFICATION

(11) **EP 3 074 745 B1**
(45) Date of publication and mention of the grant of the patent: **13.11.2019**
(21) Application number: 14827561.3
(22) Date of filing: 27.11.2014
(51) Int. Cl.: G01M 3/36

(54) **A LEAK DETECTOR AND PACKAGE INTEGRITY TESTING MECHANISM AND TESTING METHOD FOR VACUUM-SEALED PACKAGES**
LECKDETEKTOR UND MECHANISMUS ZUR PRÜFUNG DER VERPACKUNGSUNVERSEHRT SOWIE TESTVERFAHREN ZUR PRÜFUNG VON VAKUUMPACKUNGEN
MÉCANISME DÉTECTEUR DE FUITE ET DE VÉRIFICATION DE L'INTÉGRITÉ D'UN EMBALLAGE, ET PROCÉDÉ DE VÉRIFICATION POUR DES EMBALLAGES SCELLÉS SOUS VIDE

(30) Priority: 28.11.2013 NZ 61832913
(43) Date of publication of application: 05.10.2016
(73) Proprietor: Mercer Technologies Limited, 1061 Auckland (NZ)
(72) Inventor: MORATTI, Terence John, 4312 New Plymouth (NZ)
(74) Representative: Roberts, Gwilym Vaughan
(86) International application number: PCT/NZ2014/000236
(87) International publication number: WO 2015/080601

(56) References cited:
- EP-A1- 1 050 469
- WO-A1-93/18385
- DE-C1- 19 622 588
- DE-U1-202011 107 446

## Description

### Field of the Invention

The present invention relates to a device for detecting leaks and testing the integrity of vacuum-sealed packages. The present invention also relates to a method for detecting leaks and testing the integrity of vacuum-sealed packages. More particularly, although not exclusively, the present invention relates to an apparatus and method where film packaging is put under tension in a particular area and direction, and in a particular manner, and the result is compared to a standard profile to assess the integrity of the vacuum package.

### Background

Vacuum packing or vacuum packaging is a method of food packaging in which all or nearly all of the air in a food package is removed prior to the package being sealed. As the amount of oxygen in the sealed package has been significantly reduced, the growth of aerobic bacteria or fungi is inhibited. The reduction of air also helps to prevent or reduce the evaporation of volatile components from the foodstuff.

Removing air from the container extends the shelf life of foods and reduces the volume of the contents and package. This allows certain foodstuffs that would otherwise spoil quickly to be stored for longer before use. This also enables perishable foodstuffs to be economically and practically transported over longer distances than would otherwise be the case, with space requirements minimised. It is important that the seal is correctly formed before the foodstuffs are transported or stored, and it is important that the seal remains intact until knowingly broken by an end user. Once the seal is broken, bacteria or fungi within the foodstuff are exposed to atmosphere, and their growth is no longer inhibited. If the seal was not initially properly formed (and the foodstuff has remained exposed to atmosphere), or if the seal has been inadvertently broken post-forming, this can lead to inadvertent or unwanted spoilage and wastage. To avoid this, a number of methods and devices have been devised to test the integrity of seals post-packaging.

One common testing method is to test the packages in evacuated chambers, or to submerge the packages in water. An evacuated chamber is bulky, requires maintenance and can be complex to operate. Immersion requires a water tank, and there is associated expense to build and maintain this tank, an associated complexity of operation and potential contamination of the foodstuffs.

Another known method is to use suction cups on package film to pull the film away from the product and measure the displacement relative to a control package. One drawback to this method is that it can be difficult to achieve a good seal on the packaging as this requires a relatively flat surface area for the cup to seal onto. It is also preferred that the film or other packaging has sufficient 'give' for a useful measurement to be achievable. This can sometimes be difficult to achieve.

US3,744,210 describes a method and apparatus where testing for vacuum leaks in cheese blocks is carried out by detecting leakage of tracer gas introduced into packaging.

US4,517,827 describes a method and apparatus whereby a compressive force is applied to a vacuum packed package that contains a particulate contents, and the displacement of the packaging is measured and compared to a control package to determine leak integrity.

US5,531,101 describes a method and apparatus which applies tension to the surface packaging of a vacuum packed product via a rotatable roller frictionally engaged with the packaging, to determine displacement compared to a control package. The roller imparts a compressive and shear force to the packaging of a vacuum packed product to create tension and displacement across the face of the product.

US3,998,091 describes a method and apparatus which tests the packaging of a vacuum-packed product for leaks by applying a rotational force to the package and measuring the deflection relative to that of a standard package with an intact seal.

US2010/0122570 describes a leak detector system for a sealed food package where a portion of the packaging is deflected, and the deflection compared to the deflection characteristic of a standard, sealed package. Other leak detector systems of the prior art are disclosed in DE19622588C1. WO93/18385A1 and EP1050469A1.

There are a number of drawbacks associated with the methods which are known in the art. Methods and apparatus which use tracer gases or water immersion are prone to contamination of the foodstuff. Methods and apparatus which apply force to the packaging can subject the packaging material to excessive stress which can result in damage. The known methods and associated apparatus can be expensive, unreliable and slow.

It is an object of the present invention to provide a device for detecting leaks and testing the integrity of vacuum-sealed packages which goes some way to overcoming the abovementioned disadvantages or which at least provides the public or industry with a useful choice.

It is a further object of the present invention to provide a method for detecting leaks and testing the integrity of vacuum-sealed packages which goes some way to overcoming the abovementioned disadvantages or which at least provides the public or industry with a useful choice.

Further objects and advantages of the invention will be brought out in the following portions of the specification, wherein the detailed description is for the purpose of fully disclosing the preferred embodiment of the invention without placing limitations thereon.

The background discussion (including any potential prior art) is not to be taken as an admission of the common general knowledge.

### Summary of the Invention

In a first aspect, the invention may broadly be said to consist in a seal testing apparatus for testing the integrity of the seal in the packaging of a vacuum packed, according to claim 1.

Preferably the mechanical gripper is a clamp adapted to close and grip each side of a flap extending from the main body of the packaging.

Preferably the clamp has at least one moving portion which is driven by a second actuator.

Preferably the second actuator is a pneumatic cylinder with linear travel.

Preferably the first actuator is a linear actuator.

Preferably the first actuator is a pneumatic cylinder.

Preferably the sensing means is an actuator position sensor or mounted position transmitter.

Preferably the sensing means is a linear variable differential transformer (LVDT) or similar inductive device.

Preferably the seal testing apparatus further has a frame on which the vacuum-packed product rests in use, and the gripper is mounted on a sub-frame pivotally connected to the frame, the first actuator acting on the sub-frame to urge the gripper away from the frame.

Preferably the seal testing apparatus further has a gusset manipulator, comprising at least one finger which is inserted into the gusset fold area to manipulate a gusset in the packaging associated with the flap.

Preferably the gusset manipulator is a pair of fingers that pivot into and out of engagement with the gusset fold, each of the fingers having a hook portion on the inner end which is inserted into the side of the gusset fold as the fingers engage.

Preferably the fingers are mounted on the sub-frame via vertically-aligned pivot points and are connected via intermeshing gear segments, a third linear actuator connecting between the frame and one of the gear segments to rotate the gear segment and move the fingers into engagement when activated.

Preferably the gusset manipulator is moveably connected to the sub-frame via a fourth linear actuator which pushes the gusset manipulator away from the frame when activated.

Preferably an endless linear belt is mounted on the frame, the package resting on and transported by the belt in operation.

Preferably the belt transports the package from one side of the frame to the other, past the sub-frame and gusset manipulator.

Preferably the seal testing machine further has a sensor which automatically detects when the package is aligned with the sub-frame and gusset manipulator, the evaluator controlling movement of the belt and stopping the belt when the package is correctly aligned.

Preferably a linear actuator positions the package towards the gusset manipulator such as to facilitate testing.

Preferably the evaluator receives input from the sensing means and assesses seal integrity by comparing actual displacement over time to a predefined acceptable profile of displacement and time.

The acceptable profile may consist of an absolute displacement.

Alternatively the acceptable profile may consist of displacement over a time interval.

In a second aspect the invention may broadly be said to consist in a method of testing seal integrity in the packaging of a vacuum packed product, according to claim 11.

Preferably in the step of comparing the monitored movement with an acceptable profile actual displacement over time is compared to a predefined acceptable profile of displacement and time.

The step of comparing the monitored movement with an acceptable profile the acceptable profile may consist of an absolute displacement.

Alternatively in the step of comparing the monitored movement with an acceptable profile the acceptable profile may consist of displacement over a time interval.

Preferably after a predetermined time the mechanical grip is released and the displacement assessed.

Preferably in the step of mechanically gripping a portion of the packaging a flap or seal is gripped.

Preferably in the step of mechanically gripping a portion of the packaging mechanical fingers are inserted into the gusset fold area to manipulate a gusset in the packaging associated with the flap.

### Brief Description of the Drawings

Embodiments of the present invention will now be described, by way of example only, with reference to the accompanying drawings, in which:

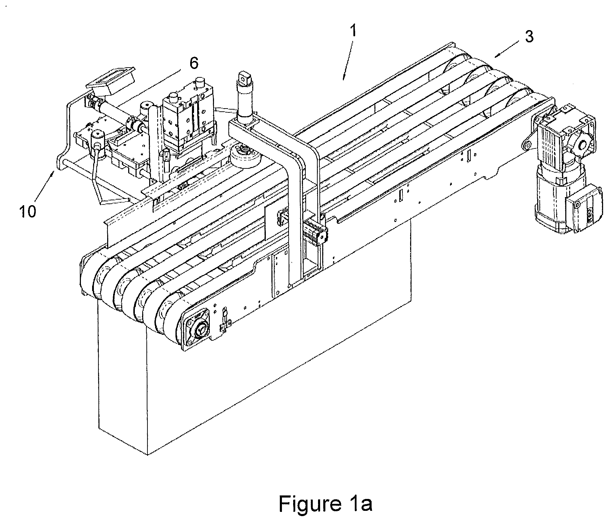

- **Figure 1a**: shows a perspective view of an embodiment of the seal testing apparatus of the present invention;

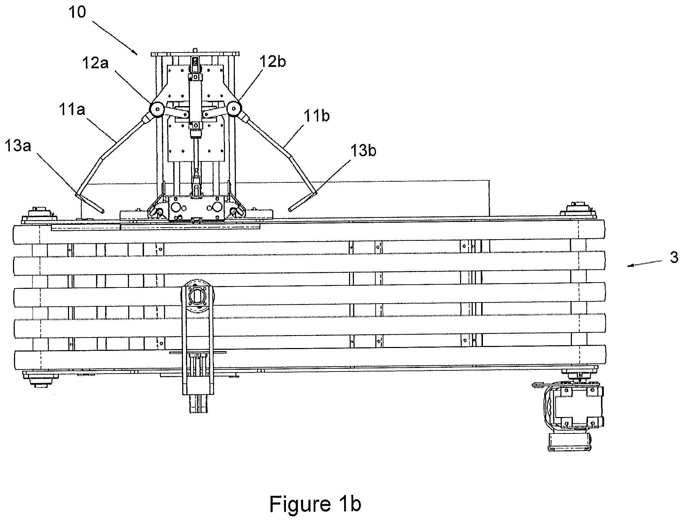

- **Figure 1b**: shows a plan view of the embodiment of the seal testing apparatus of the present invention shown in figure 1a;

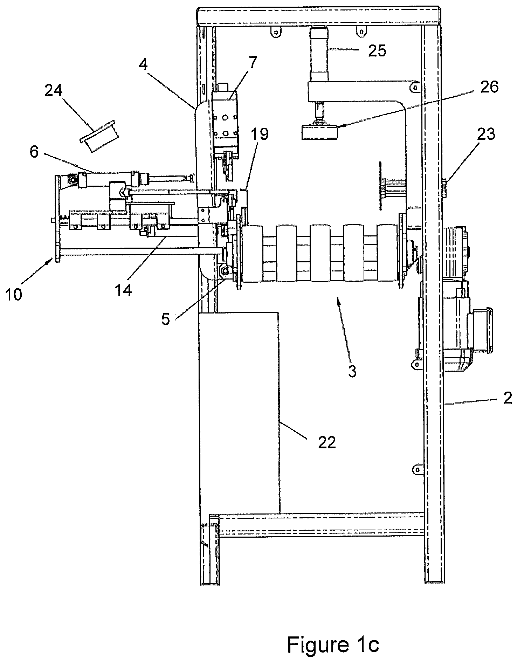

- **Figure 1c**: shows a view from the entry end of the embodiment of the seal testing apparatus of the present invention shown in figures 1a and figure 1b;

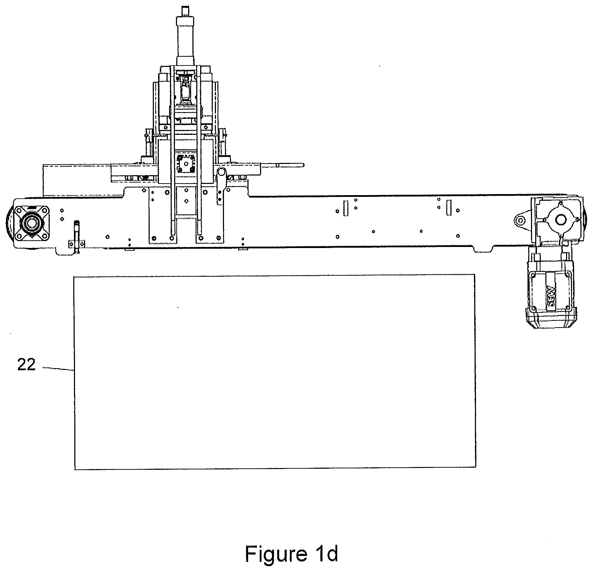

- **Figure 1d**: shows a side view of the embodiment of the seal testing apparatus of the present invention shown in figures 1a, 1b, and 1c;
- **Figure 2**: shows a perspective view of the seal testing apparatus of the present invention shown in figures 1a-d mounted to a frame with a protective enclosure around the testing station;

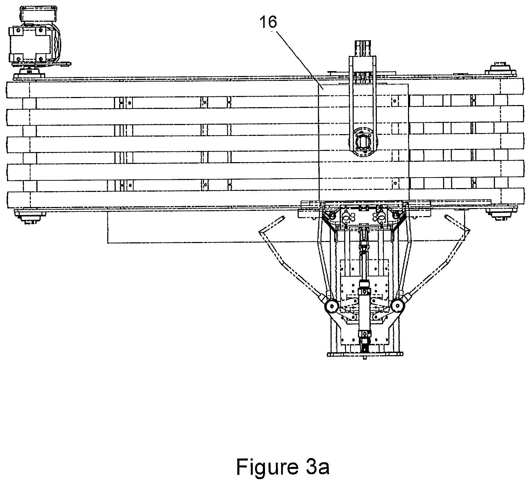

- **Figure 3a**: shows a plan view of a gusset manipulation station that forms part of the seal testing apparatus of the present invention;

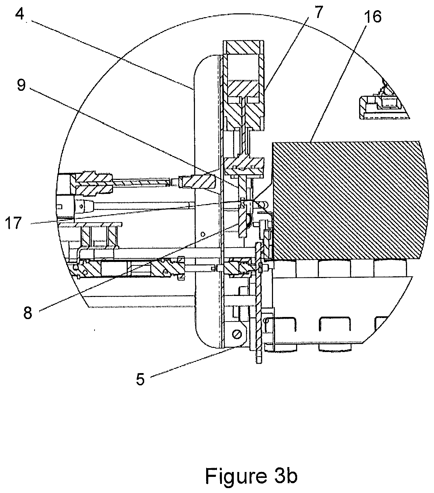

- **Figure 3b**: shows a cross-sectional view along line A-A in Figure 3a; and

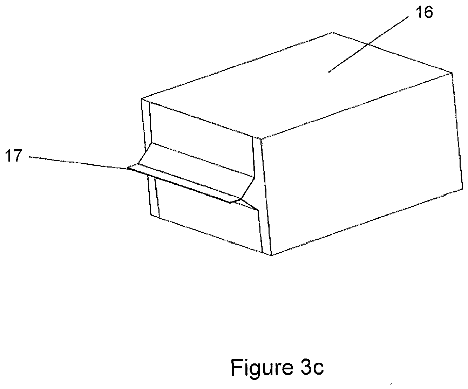

- **Figure 3c**: shows a vacuum packed package of cheese with a flap/seal at one end.

### Detailed Description of the Invention

The preferred embodiments of the invention are described below. The preferred embodiments are described in relation to testing the seal integrity for a generally cuboidal block of cheese weighing 20 kilograms, vacuum-packed in film packaging, the cuboidal block several times wider and longer than it is high. However, the invention may also be applied to any other suitable vacuum-packed items of different sizes with the same or similar configuration - for example a bag of ground coffee or coffee beans which also has a sealed flap - and the description should not be taken as limiting. Also, the preferred embodiment is described in relation to a vacuum-packed item where the item is sealed within a bag formed from film packaging which has a single open end, sealed during the packaging process and with a seal/flap extending from one side or end. The invention could be used with other forms of vacuum-packaging, or other configurations of packaging, for example where the seal or flap is at the top of the packet - e.g. as in a bag of ground coffee or coffee beans. If the seal flap is at the top of the bag, the testing would be carried out either with the bag lying on its side, or a modification of the preferred embodiment as described below would be used in order to test for a package with an upwardly-oriented flap.

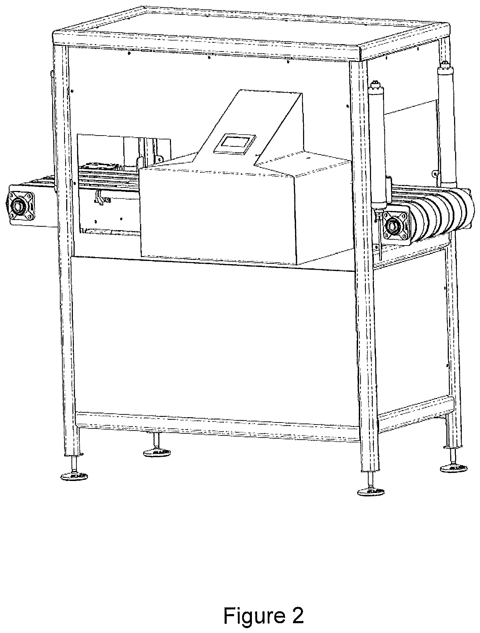

A leak detector 1 is shown in the figures. Figure 2 shows the leak detector 1 mounted to a support frame 2 with a protective housing 22 covering the testing station including a human machine interface 24. The other figures show the detail of the testing mechanisms. The leak detector 1 has a frame 2 which in use rests on a surface (a warehouse floor or similar) to hold the remainder of the apparatus away from the ground. The frame 2 also holds various parts of the remainder of the testing apparatus in position. The leak detector 1 has a central conveyor 3 which in the preferred embodiment is of the linear endless belt type, aligned horizontally to convey items from one (open) end or side of the leak detector 1 to the other, opposite (open) side. As shown in the figures, the conveyor 3 can be formed from a number of smaller sub-belts in parallel or a single wide belt.

A sub-frame 4 is pivotally connected to the frame 2 to one side of the conveyor 3. The sub-frame 4 is connected to the frame 2 via a hinge 5 located below the level of the central conveyor 3, the sub-frame 4 extending upwards above and to the side of the conveyor 3. A first actuator 6 is mounted on a second sub-frame (not shown) above the conveyor 3. The actuator 6 is, in the preferred embodiment, a pneumatic cylinder with linear travel. However, the actuator 6 could be a hydraulic cylinder, or any other suitable type of actuator: linear, rotary or otherwise. The active or moving end of the first pneumatic cylinder 6 is connected to the sub-frame 4. The body of the first cylinder 6 is connected and held rigidly in relation to the conveyor 3, via the second sub-frame. As the cylinder 6 activates, it pushes the sub-frame 4 so that the sub-frame 4 rotates outwards around the pivot point of the hinge 5 away from the conveyor 3.

### Mechanical gripper and gusset/flap manipulation station

A gusset manipulation station 10 is connected to the sub-frame 4, the station is connected so that it is just above and to the side of the surface of the conveyor 3. The gusset manipulation station 10 has a number of interlocking and moving elements which are activated by actuating cylinders as described below.

A fixed anvil 8 is connected to the sub-frame 4. The fixed anvil 8 has a horizontal upwards-facing anvil striking surface. A second linear actuator - flap clamp cylinder 7 - is connected to the sub-frame 4 between the body of the sub-frame 4 and the conveyor 3, above the fixed anvil 8. The preferred embodiment of flap clamp cylinder 7 is a pneumatic cylinder, with a moving piston that has a clamp anvil 9 on the lower end, the clamp anvil 9 having a downwards-facing anvil surface complimentary to and aligned with the upwardly-facing surface of the fixed anvil 8. When the flap clamp cylinder 7 activates, the downwards-facing anvil surface of the clamp anvil 9 is moved downwards to contact and press against the upwardly-facing surface of the anvil 8. These items form a mechanical gripper for a package, either by themselves or in combination with other items as described below. In the preferred embodiment, the position of the fixed anvil 8 is vertically adjustable, and most preferably horizontally adjustable also (towards and away from the conveyor 3). The position of the flap clamp cylinder 7 and in particular the clamp anvil 9 is adjustable in a complimentary manner, either by adjustment of the position of the flap clamp cylinder 7 in it's entirety, or by adjusting the stroke length to suit, so that contact is made at all positions between the flap clamp cylinder 7 and the clamp anvil 9. The linear pneumatic flap clamp cylinder 7 could be replaced by any suitable clamping mechanism - for example by a jaw rotating towards the anvil, or a pair of jaws rotating together towards one another, or clamping elements which screw towards one another.

A pair of mechanical fingers 11a, 11b are located one on each side of the gusset manipulation station 10. Each finger 11 is formed from an elongate member extending towards the conveyor 3, the two fingers 11a, 11b angled away from one another (that is, if the lines of the main portion of the bodies of the fingers were extended to convergence, this would occur at a point further away from the conveyor). The outer end (away from the conveyor) of each finger 11a and 11b is connected to a pivoting element 12a and 12b that pivots around a substantially vertical axis so that the fingers 11a and 11b rotate in a substantially horizontal plane. The inner ends of the fingers 11a and 11b are angled inwards to form hook portions 13a and 13b. In the preferred embodiment, the pivoting elements 12a and 12b are a pair of meshed, interlocking gear sections or arcs connected to the sub-frame 4, the interlocking portions located between the vertical rotation axes. A third linear actuator 14 is connected between a fixed point on the sub-frame 4, and a point on the perimeter of one of the pivoting elements 12a and 12b (i.e. at a distance from the vertical rotation axis of that pivoting element, and between the rotation axes). The third linear actuator 14 is aligned to activate horizontally away from the conveyor 3 (in the preferred embodiment, substantially perpendicular to the conveyor 3). As the third linear actuator 14 activates, it causes the connected one of the pivoting elements 12 to rotate around the vertical rotation axis, which causes the other pivot element to also rotate in the opposite direction due to the meshed gearing. This causes the fingers 11 to rotate inwards, or towards one another. The fingers 11 and the hook portions 13 are shaped and sized so that the inner ends arc towards one another and nearly contact each other just to the side and above the edge of the conveyor 3. In the preferred embodiment, the third linear actuator is a pneumatic cylinder. As before, this could alternatively be a hydraulic cylinder, a rotary screw, or a similar actuating mechanism. The fingers and their associated elements form another part of the mechanical gripper formed by flap clamp cylinder 7, clamp anvil 9 and anvil 8.

In the preferred embodiment, the gusset manipulation station 10 is mounted to the sub-frame 4 in such a manner that it can move relative to the sub-frame 4, substantially horizontally towards and away from the sub-frame 4 and conveyor 3.

### Operation

Operation of the apparatus will now be described with reference to the structural elements described above, and further structural description as necessary.

A single specimen of the product to be tested - i.e. a 20kg block of vacuum packed cheese 16 in the preferred embodiment (or other similar vacuum packed product) is guided onto the belt of the central conveyor 3 at one end, and moves with the belt along and through the leak detector 1 to a point determined by a photo cell (not shown) mounted either on the frame 2, or an equally appropriate position. Another similar type of sensor could be used instead of the photo cell (for example a weight sensor placed under the belt at the appropriate position, which activates when the cheese or other product is above the sensor. The bagged cheese 16 is placed on the belt so that the flap/seal 17 extends generally horizontally out to one side of the conveyor, on the same side as the sub-frame 2. As the preferred embodiment of the apparatus will be used to test multiple specimens of identical size and packaging, the vertical position of the flap/seal is known, as each individual product item is substantially identical to the others. This allows an initial setup/location of items such as the position of the clamp anvil 9 and the fixed anvil 8. The block of cheese 16 travels along the conveyor 3 until the photo cell detects that the bagged cheese 16 is positioned and/or aligned opposite the gusset manipulation station 10. Linear actuator 23 may then push the bagged cheese 16 towards the gusset manipulation station 10 until the flap 17 is between the clamp anvil 9 and the fixed anvil 8. Linear actuator 23 may extend a predetermined distance each time for packages of consistent dimensions or a further sensor may be employed to detect that the flap 17 is correctly located between the anvils.

The first linear actuator - the flap clamp pneumatic cylinder 7 - is then activated to push the clamp anvil 9 downwards and clamp the flap 17 between the clamp anvil 9 and the fixed anvil 8.

The second linear actuator - the bag flap stressing pneumatic cylinder 6 - further has an associated sensing means (not shown). Once the flap 17 is clamped, the bag flap stressing cylinder 6 is then activated to apply a force to the sub-frame 4 and rotate this around the pivot point of the hinge 5 and away from the block of cheese. As the flap 17 is gripped between the clamp anvil 9 and the fixed anvil 8 it will pull away from and to the side of the block of cheese 16. The sensing means will start to measure the displacement of the sub-frame 4, which is indicative of a leak in the plastic packaging. In the preferred embodiment, the sensing means is an actuator position sensor or mounted position transmitter, most preferably a linear variable differential transformer (LVDT) or similar inductive device. The product movement is limited towards sub-frame 4 by a fence fitted to the frame of the testing unit and providing a measurement reference for the displacement of the gripped flap. For lighter products a clamp or holding system can be added to the apparatus to secure it in place during the testing sequence.
At the same time as the bag flap stressing cylinder 6 is activated, the third linear actuator 14 is activated. This causes the two mechanical fingers 11a, 11b to rotate inwards towards one another. The hook portions 13a, 13b on the ends of the fingers 11a, 11b will be inserted into the folded gussets on each side of the flap 17 of the plastic bag. This action is independent of the action of the bag flap stressing cylinder 6 and the flap clamp cylinder 7.

Once the fingers 11a, 11b are in position, the third linear actuator - pneumatic cylinder 14 continues to extend to apply an outwards force to push the fingers 11a and 11b away from the conveyor 3. This causes the hook portions to snag into and manipulate the gusset, and in particular the inside of the plastic gusset seal weld, and a pulling force is applied away from the block of cheese 16. This action will indicate any weakness in the heat sealed area, which will translate to further measurable movement in bag flap stressing cylinder 6 if a leak is present. The preferred embodiment of the present invention includes an evaluator or evaluating means which receives signals relating to the sensed movement, and uses these to evaluate whether there is a leak or not. In the preferred embodiment, the leak evaluation is conducted using the sensed amount of movement from bag flap stressing cylinder 6. The amount of movement is compared with an acceptable or predefined profile, which is held in the memory of the evaluator. The results of this evaluation tags the product acceptable, or to be rejected.

An additional suction testing method may also be employed. A linear actuator in the form of pneumatic ram 25 may lower suction cup 26 down onto the top surface of the block of cheese 16. Suction may then be applied to the suction cup 26 and the pneumatic ram may be retracted with a set force. The distance travelled up by the pneumatic ram may be measured to provide an additional assessment as to whether the bag is leaking or not. A suction testing method may be used before, after or during the gusset flap testing method described above.

After a predetermined time all the actuators - first cylinder 6, flap clamp cylinder 7, third cylinder 14 and fourth cylinder(s) 15 - will return to their resting position. This releases the block of cheese 16. Once the cylinders reach their initial or resting position, movement of the conveyor 3 resumes.

### Advantages

The method (and associated apparatus) as outlined above is advantageous as outlined below:
Pulling the flap/seal 17 is an effective method of detecting large leaks, and pulling in this manner puts lower stress on the packaging.

Testing the gusset by manipulating and pulling from the inside (using the fingers) allows good detection of slow leaks, and requires the application of minimal force on the packaging.

Using a mechanical gripper provides a robust and reliable means of engagement with the packaging, and does not require a flat surface for use. The apparatus can therefore provide a useful alternative to an apparatus or method that uses only a suction cup.

Using a method where the flap/seal is pulled and also the gusset is manipulated or pulled from inside the folds provides both a primary and secondary method of determining leaks (the seal/flap pull and the gusset manipulation, respectively). The gusset manipulation also acts as a useful comparator to the physical manipulation.

While the present invention has been illustrated by the description of the embodiments thereof, and while the embodiments have been described in detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus and method, and illustrative examples shown and described.

## Claims

1. A seal testing apparatus (1) for testing the integrity of the seal in the packaging of a vacuum packed product (16), comprising:
a mechanical gripper (8, 9) for gripping a portion of the packaging (17);
a first actuator (6) configured to pull the gripped portion away from the product;
a sensor for monitoring the movement of the gripped portion relative to the vacuum packed product (16), and;
an evaluator that compares the sensed movement of the gripped portion with an acceptable profile and accepts or rejects the product based on the comparison.

2. A seal testing apparatus as claimed in claim 1 wherein the mechanical gripper is a clamp adapted to close and grip each side of a flap extending from the main body of the packaging.

3. A seal testing apparatus as claimed in claim 1 or claim 2 wherein the sensor is an actuator position sensor or mounted position transmitter.

4. A seal testing apparatus as claimed in any one of claims 1 to 3 wherein the seal testing apparatus further has a frame on which the vacuum-packed product rests in use, the gripper is mounted on a sub-frame pivotally connected to the frame, the first actuator acting on the sub-frame to pull the closed gripper away from the product.

5. A seal testing apparatus as claimed in any one of claims 1 to 4 wherein the seal testing apparatus further has a gusset manipulator, comprising at least one finger which is inserted into the gusset fold area to manipulate a gusset in the packaging associated with the flap.

6. A seal testing apparatus as claimed in claim 5 wherein the gusset manipulator is a pair of fingers that pivot into and out of engagement with the gusset fold, each of the fingers having a hook portion on the inner end which is inserted into the side of the gusset fold as the fingers engage.

7. A seal testing machine as claimed in any one of claims 4 to 6 wherein an endless linear belt is mounted on the frame, the package resting on and transported by the belt in operation, the belt transporting the package from one side of the frame to the other, past the sub-frame and gusset manipulator.

8. A seal testing machine as claimed in any one of claims 1 to 7 wherein the evaluator receives input from the sensor and assesses seal integrity by comparing actual displacement over time to a predefined acceptable profile of displacement and time.

9. A seal testing machine as claimed in claim 8 wherein the acceptable profile consists of an absolute displacement.

10. A seal testing machine as claimed in claim 8 wherein the acceptable profile consists of displacement over a time interval.

11. A method of testing seal integrity in the packaging of a vacuum packed product comprising the steps of:
mechanically gripping a portion of the packaging;
applying a force to pull the gripped portion in a direction away from the product;
monitoring the movement of the gripped portion relative to the vacuum packed product;
comparing the monitored movement with an acceptable profile; and
accepting or rejecting the product based on the comparison.

12. A method of testing seal integrity as claimed in claim 11 wherein in the step of comparing the monitored movement with an acceptable profile actual displacement over time is compared to a predefined acceptable profile of displacement and time.

13. A method of testing seal integrity as claimed in claim 11 or claim 12 wherein in the step of comparing the monitored movement with an acceptable profile the acceptable profile consists of an absolute displacement.

14. A method of testing seal integrity as claimed in claim 11 or claim 12 wherein in the step of comparing the monitored movement with an acceptable profile the acceptable profile consists of displacement over a time interval.

15. A method of testing seal integrity as claimed in any one of claims 11 to 14 wherein in the step of mechanically gripping a portion of the packaging mechanical fingers are inserted into the gusset fold area to manipulate a gusset in the packaging associated with the flap.

## Patentansprüche

1. Dichtheitsprüfvorrichtung (1) zum Prüfen der Unversehrtheit der Dichtung in der Verpackung eines vakuumverpackten Produkts (16), umfassend:
einen mechanischen Greifer (8, 9) zum Greifen eines Abschnitts der Verpackung (17);
ein erstes Betätigungselement (6), das dazu ausgelegt ist, den gegriffenen Abschnitt von dem Produkt wegzuziehen;
einen Sensor zum Überwachen der Bewegung des gegriffenen Abschnitts relativ zum vakuumverpackten Produkt (16), und;
eine Auswerteeinrichtung, die die erfasste Bewegung des gegriffenen Abschnitts mit einem zulässigen Profil vergleicht und das Produkt basierend auf dem Vergleich annimmt oder ablehnt.

2. Dichtheitsprüfvorrichtung nach Anspruch 1, wobei der mechanische Greifer eine Klemme ist, die geeignet ist, jede Seite einer sich vom Hauptkörper der Verpackung erstreckenden Klappe zu schließen und zu greifen.

3. Dichtheitsprüfvorrichtung nach Anspruch 1 oder Anspruch 2, wobei der Sensor ein Betätigungselement-Positionssensor oder ein angebauter Positionsgeber ist.

4. Dichtheitsprüfvorrichtung nach einem der Ansprüche 1 bis 3, wobei die Dichtheitsprüfvorrichtung ferner einen Rahmen aufweist, auf dem das vakuumverpackte Produkt bei Gebrauch aufliegt, der Greifer auf einem mit dem Rahmen schwenkbar verbundenen Hilfsrahmen montiert ist, das erste Betätigungselement auf den Hilfsrahmen wirkt, um den geschlossenen Greifer vom Produkt weg zu ziehen.

5. Dichtheitsprüfvorrichtung nach einem der Ansprüche 1 bis 4, wobei die Dichtheitsprüfvorrichtung ferner einen Seitenfaltenmanipulator aufweist, der mindestens einen Finger umfasst, der in den Seitenfaltenbereich eingeführt wird, um eine Seitenfalte in der mit der Klappe verbundenen Verpackung aufzugreifen.

6. Dichtheitsprüfvorrichtung nach Anspruch 5, wobei der Seitenfaltenmanipulator ein Paar von Fingern ist, die in und aus dem Eingriff mit der Seitenfalte schwenken, wobei jeder Finger einen Hakenabschnitt am inneren Ende aufweist, der beim Eingreifen der Finger in die Seite der Seitenfalte eingeführt wird.

7. Dichtheitsprüfmaschine nach Anspruch 4 bis 6, wobei ein endloses lineares Band auf dem Rahmen montiert ist, das Paket auf dem Band in Betrieb aufliegt und von diesem transportiert wird und das Band das Paket von einer Seite des Rahmens zur anderen, am Hilfsrahmen und Seitenfaltenmanipulator vorbei, transportiert.

8. Dichtheitsprüfmaschine nach einem der Ansprüche 1 bis 7, wobei die Auswerteeinrichtung Eingaben vom Sensor empfängt und die Unversehrtheit der Dichtung durch Vergleichen der tatsächlichen Verschiebung im Zeitverlauf mit einem vordefinierten zulässigen Profil der Verschiebung und Zeit beurteilt.

9. Dichtheitsprüfmaschine nach Anspruch 8, wobei das zulässige Profil aus einer absoluten Verschiebung besteht.

10. Dichtheitsprüfmaschine nach Anspruch 8, wobei das zulässige Profil aus einer Verschiebung über ein Zeitintervall besteht.

11. Verfahren zum Prüfen der Unversehrtheit der Dichtung bei der Verpackung eines vakuumverpackten Produkts, umfassend die Schritte:
mechanisches Greifen eines Teils der Verpackung;
Aufbringen einer Kraft, um den gegriffenen Abschnitt in eine Richtung vom Produkt weg zu ziehen;
Überwachen der Bewegung des gegriffenen Abschnitts relativ zum vakuumverpackten Produkt;
Vergleichen der überwachten Bewegung mit einem zulässigen Profil; und
Annahme oder Ablehnung des Produkts basierend auf dem Vergleich.

12. Verfahren zum Prüfen der Unversehrtheit der Dichtung nach Anspruch 11, wobei beim Schritt des Vergleichens der überwachten Bewegung mit einem zulässigen Profil die tatsächliche Verschiebung über die Zeit mit einem vordefinierten zulässigen Profil der Verschiebung und Zeit verglichen wird.

13. Verfahren zum Prüfen der Unversehrtheit der Dichtung nach Anspruch 11 oder Anspruch 12, wobei beim Schritt des Vergleichens der überwachten Bewegung mit einem zulässigen Profil das zulässige Profil aus einer absoluten Verschiebung besteht.

14. Verfahren zum Prüfen Unversehrtheit der Dichtung nach Anspruch 11 oder Anspruch 12, wobei beim Schritt des Vergleichens der überwachten Bewegung mit einem zulässigen Profil das zulässige Profil aus einer Verschiebung über ein Zeitintervall besteht.

15. Verfahren zum Prüfen der Unversehrtheit der Dichtung nach einem der Ansprüche 11 bis 14, wobei beim Schritt des mechanischen Greifens eines Abschnitts der Verpackung mechanische Finger in den Seitenfaltenbereich eingeführt werden, um eine Seitenfalte in der mit der Klappe verbundenen Verpackung handzuhaben.

## Revendications

1. Appareil de test de joint (1) pour tester l'intégrité du joint dans l'emballage d'un produit emballé sous vide (16), comprenant:
un préhenseur mécanique (8, 9) pour saisir une partie de l'emballage (17);
un premier actionneur (6) configuré de manière à tirer la partie saisie à l'écart du produit;
un capteur pour surveiller le déplacement de la partie saisie par rapport au produit emballé sous vide (16); et
un évaluateur qui compare le déplacement détecté de la partie saisie avec un profil acceptable et qui accepte ou qui rejette le produit sur la base de la comparaison.

2. Appareil de test de joint selon la revendication 1, dans lequel le préhenseur mécanique est une pince adaptée pour se fermer et saisir chaque côté d'un volet qui s'étend à partir du corps principal de l'emballage.

3. Appareil de test de joint selon la revendication 1 ou la revendication 2, dans lequel le capteur est un capteur de position d'actionneur ou un transmetteur de position monté.

4. Appareil de test de joint selon l'une quelconque des revendications 1 à 3, dans lequel l'appareil de test de joint comprend en outre un cadre sur lequel le produit emballé sous vide repose lors de l'utilisation, le préhenseur est monté sur un sous-cadre connecté de façon pivotante au cadre, le premier actionneur agissant sur le sous-cadre pour tirer le préhenseur fermé à l'écart du produit.

5. Appareil de test de joint selon l'une quelconque des revendications 1 à 4, dans lequel l'appareil de test de joint comprend en outre un manipulateur de gousset, comprenant au moins un doigt qui est inséré dans la région de pli de gousset afin de manipuler un gousset dans l'emballage associé au rabat.

6. Appareil de test de joint selon la revendication 5, dans lequel le manipulateur de gousset est une paire de doigts qui pivotent en engagement et hors d'engagement avec le pli de gousset, chacun des doigts présentant une partie de crochet sur l'extrémité intérieure qui est insérée dans le côté du pli de gousset lorsque les doigts s'engagent.

7. Machine de test de joint selon l'une quelconque des revendications 4 à 6, dans laquelle une courroie linéaire sans fin est montée sur le cadre, l'emballage reposant sur et étant transporté par la courroie lors du fonctionnement, la courroie transportant l'emballage d'un côté du cadre à l'autre, au-delà du sous-cadre et du manipulateur de gousset.

8. Machine de test de joint selon l'une quelconque des revendications 1 à 7, dans laquelle l'évaluateur reçoit une entrée en provenance du capteur et évalue l'intégrité du joint en comparant un déplacement réel dans le temps avec un profil de déplacement acceptable et un temps prédéfinis.

9. Machine de test de joint selon la revendication 8, dans laquelle le profil acceptable consiste en un déplacement absolu.

10. Machine de test de joint selon la revendication 8, dans laquelle le profil acceptable consiste en un déplacement sur un intervalle de temps.

11. Procédé pour tester l'intégrité d'un joint dans l'emballage d'un produit emballé sous vide, comprenant les étapes suivantes:
saisir mécaniquement une partie de l'emballage;
appliquer une force pour tirer la partie saisie dans une direction opposée au produit;
surveiller le déplacement de la partie saisie par rapport au produit emballé sous vide;
comparer le déplacement surveillé avec un profil acceptable; et
accepter ou rejeter le produit sur la base de la comparaison.

12. Procédé pour tester l'intégrité d'un joint selon la revendication 11, dans lequel à l'étape de comparaison du déplacement surveillé avec un profil acceptable, le déplacement réel dans le temps est comparé avec un profil de déplacement acceptable et un temps prédéfinis.

13. Procédé pour tester l'intégrité d'un joint selon la revendication 11 ou la revendication 12, dans lequel à l'étape de comparaison du déplacement surveillé avec un profil acceptable, le profil acceptable consiste en un déplacement absolu.

14. Procédé pour tester l'intégrité d'un joint selon la revendication 11 ou la revendication 12, dans lequel à l'étape de comparaison du déplacement surveillé avec un profil acceptable, le profil acceptable consiste en un déplacement sur un intervalle de temps.

15. Procédé pour tester l'intégrité d'un joint selon l'une quelconque des revendications 11 à 14, dans lequel à l'étape de saisie mécanique d'une partie de l'emballage, des doigts mécaniques sont insérés dans la région de pli de gousset afin de manipuler un gousset dans l'emballage associé au rabat.
